# EUROPÄISCHE PATENTSCHRIFT

(11) **EP 0 388 786 B1**
(45) Veröffentlichungstag und Bekanntmachung des Hinweises auf die Patenterteilung: **29.11.1995**
(21) Anmeldenummer: 90104882.7
(22) Anmeldetag: 15.03.1990
(51) Int. Cl.: B27C 1/10, B23Q 9/00

(54) **Elektrisch betriebener Einhandhobel**
Electrically driven single-handed planing tool
Outil de rabotage électrique à une main

(30) Priorität: 22.03.1989 AT 666/89
(43) Veröffentlichungstag der Anmeldung: 26.09.1990
(73) Patentinhaber: Walke, Paul, D-31542 Bad Nenndorf (DE)
(72) Erfinder: Walke, Paul, D-31542 Bad Nenndorf (DE)
(74) Vertreter: Freiherr von Schorlemer, Reinfried, Dipl.-Phys.

(56) Entgegenhaltungen:
- EP-A- 0 150 045
- FR-A- 1 041 530
- GB-A- 1 319 881
- US-A- 2 699 805
- US-A- 3 893 372

## Beschreibung

Die Erfindung betrifft einen Einhandhobel nach dem Oberbegriff des einzigen Patentanspruchs.

Bei einem bekannten Einhandhobel dieser Art (EP-A-150 045) besteht der Führungsanschlag aus einer Mehrzahl von Teilen, die dazu dienen, den Winkel zwischen den beiden Führungsleisten beliebig einstellbar zu machen. Dadurch ergibt sich eine komplizierte, hohe Fertigungskosten verursachende Gesamtkonstruktion, die zwar eine Mehrzahl von Anwendungsmöglichkeiten schafft, zur bloßen Benutzung zwecks Herstellung von Fasen an den Kanten von Balken oder Brettern aber viel zu aufwendig wäre.

Daneben sind Einhandhobel mit üblichen Hobelmessern bekannt, bei denen der Führungsanschlag an einer Einrichtung angebracht ist, die nach Art einer Schraubzwinge am Hobel befestigt werden kann. Die unter einem festen Winkel von 90° angeordneten Führungsleisten bestehen hierbei aus getrennten Bauteilen, wobei eine der Führungsleisten in fester relativer Lage zum Hobel zu liegen kommt, während die andere Führungsleiste verstellbar ist, um den beiderseitigen Abstand der Führungsleisten einstellen zu können. Bei Anwendung dieser Einrichtung ist es außerdem möglich, das Werkstück mit Fasen unterschiedlicher Tiefe bzw. Breite zu versehen, indem das Hobelmesser in üblicher Weise verschoben wird. Das Hobelmesser kann dabei in Ausnehmungen eintreten, die an den Oberkanten der einzelnen Führungsleisten ausgebildet sind. Auch diese Einrichtung ist vergleichsweise aufwendig. Sie ist außerdem für motorisch betriebene Hobel wenig geeignet, weil die Gefahr besteht, daß sich beim Gebrauch die schraubzwingenartige Befestigung lockert oder löst und der Benutzer verletzt wird.

Demgegenüber liegt der Erfindung die Aufgabe zugrunde, einen speziell zur Herstellung unterschiedlich breiter oder tiefer Fasen geeigneten Einhandhobel zu schaffen, der nur wenige zusätzliche Bauteile und daher keine wesentlichen Änderungen an handelsüblichen Einhandhobeln erfordert, vergleichsweise preistgünstig hergestellt werden kann und eine hohe Betriebssicherheit besitzt.

Zur Lösung dieser Aufgabe dienen die kennzeichnenden Merkmale des einzigen Patentanspruchs.

Die zwischen den beiden Führungsleisten gebildete Ausnehmung muß ein Eintauchen der messerbestückten Walze bis zu einer Tiefe erlauben, welche den maximalen Abmessungen der zu erzeugenden Fase entspricht. Besonders vorteilhaft ist es, wenn auch Fasen geringerer Breite hergestellt werden können, indem die Eindringtiefe der Walze in den von den Führungsleisten gebildeten Winkel veränderlich gestaltet wird. Da das Winkelprofil an einem Ende um eine Achse schwenkbar und am anderen Ende beispielsweise mittels einer Klemmschraube in verschiedenen Stellungen fixierbar ist, ergibt sich eine besonders einfache Konstruktion.

Weitere Einzelheiten der Erfindung werden anschließend anhand der Zeichnung erläutert.

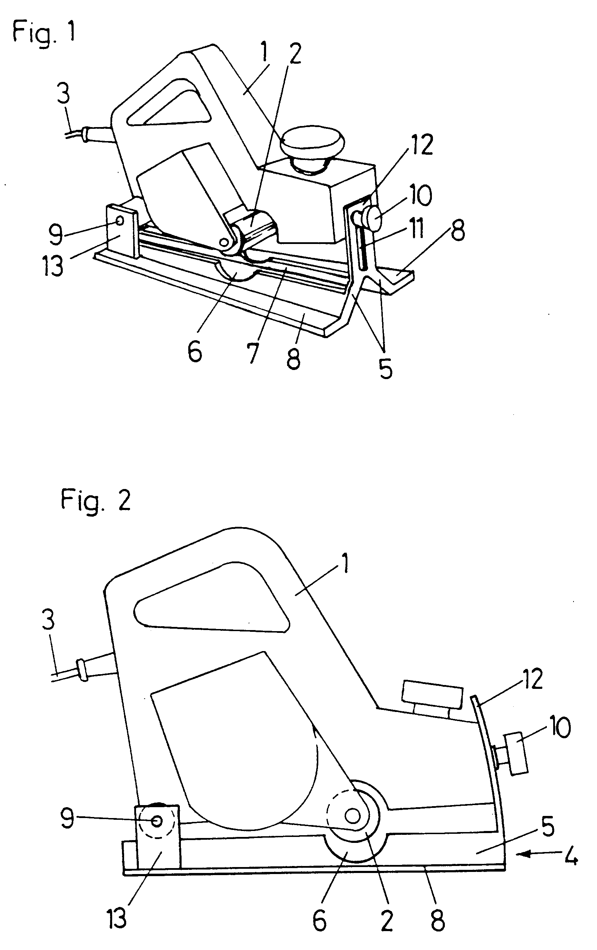

Fig. 1 ist eine schaubildliche Darstellung eines Ausführungsbeispiels der Erfindung mit maximaler Distanzierung von Hobel 1 und Winkelprofil 4, Fig. 2 eine Seitenansicht, bei der gegenüber Fig. 1 eine Annäherung von Hobel 1 und Winkelprofil 4 erfolgt ist.

Das in Fig. 1 dargestellte Werkzeug ist im wesentlichen ein elektrisch betriebener Einhandhobel mit einer Zusatzeinrichtung zur Herstellung von Fasen. Es besteht aus einem Hobel 1 mit einer quer verlaufenden Walze 2, die über ein Kabel 3 und einen um Detail nicht dargestellten elektrischen Antrieb in Drehung versetzbar ist.

An der Unterseite des Hobels 1 befindet sich ein Winkelprofil 4, dessen wesentlicher Teil im rechten Winkel zueinander schräg zur Unterseite des Hobels verlaufende Führungsleisten 5 sind. Die Führungsleisten 5 sind durch einen Schlitz 7 getrennt, der im Bereich der Walze 2 eine Ausnehmung 6 aufweist. Durch die Abmessungen der Ausnehmung 6 ist die maximale Annäherung der Walze 2 an die Führungsleisten 5 bestimmt und damit die maximale Breite der Fase, welche an dem Werkstück entsteht, an welches die Führungsleisten 5 angelegt werden.

Die Tiefe bzw. Breite der gebildeten Fase läßt sich dadurch verändern, daß das Winkelprofil 4 um eine an den Lappen 13 ausgebildete Achse 9 schwenkbar angeordnet wird. Die gewünschte Winkelstellung des Winkelprofils 4 zum Hobel 1 und damit der gewünschte Abstand der Walze 2 von den Führungsleisten 5 wird dadurch bestimmt, daß ein mit einem Langloch 11 versehener Fortsatz 12 an der Vorderseite des Winkelprofils 4 durch eine Klemmschraube 10 fixiert wird.

Die an die Führungsleisten 5 anschließenden Randleisten 8 sind funktionell ohne Bedeutung. Sie erhöhen einerseits die Festigkeit des Winkelprofils 4 und bilden andererseits eine Abdeckung für die Randbereiche der Walze 2, welche aus Sicherheitsgründen zweckmäßig ist.

Mit dem dargestellten Hobel lassen sich Fasen von 1 mm bis 30 mm herstellen, wobei die Fase an beliebiger Stelle entlang der Kante beginnen oder enden kann.

## Patentansprüche

1. Elektrisch betriebener Einhandhobel mit einer quer verlaufenden, rotierenden, messerbestückten Walze (2), wobei an der Unterseite des Hobels ein Führungsanschlag vorgesehen ist, der zwei Führungsleisten (5) zur Führung des Hobels (1) an dem Werkstück aufweist, dadurch gekennzeichnet, daß der Führungsanschlag als Winkelprofil (4) ausgebildet ist, bei dem die Führungsleisten (5) im rechten Winkel zueinander angeordnet sind und bei dem in dem durch die Führungsleisten (5) gebildeten Winkel eine von einem Teil der Walze (2) durchsetzte Ausnehmung (6) vorgesehen ist, und daß das Winkelprofil (4) an einem Ende um eine Achse (9) schwenkbar und am anderen Ende beispielsweise mittels einer Klemmschraube (10) in verschiedenen Stellungen fixierbar und dadurch der Abstand des Winkelprofils (4) von der Walze (2) veränderbar ist.

## Claims

1. Electrically operated one-hand plane with a transversely extending, rotating, bladed roller (2), wherein on the lower side of the plane is provided a guide stop which comprises two guide strips (5) for guiding the plane (1) on the workpiece, characterised in that the guide stop is constructed as an angle profile (4) in which the guide strips (5) are arranged at right angles to each other and in which, in the angle formed by the guide strips (5), there is provided a recess (6) through which passes a portion of the roller (2), and in that the angle profile (4) at one end is pivotable about a spindle (9) and at the other end can be fixed in different positions for example by means of a locking screw (10) and hence the distance from the angle profile (4) to the roller (2) is variable.

## Revendications

1. Outil de rabotage électrique à une main, comprenant un cylindre (2) tournant, orienté transversalement et équipé de lames, sur la surface inférieure du rabot étant prévue une butée de guidage avec deux barres conductrices (5) pour le guidage du rabot (1) sur la pièce à usiner, **caractérisé en ce** que la butée de guidage est conformée en cornière (4) dans laquelle les barres conductrices (5) forment entre elles un angle droit et dans laquelle un évidement (6) traversé par une partie du cylindre (2) est prévu dans l'angle formé par les barres conductrices (5), et que la cornière (4) peut pivoter à l'une des extrémités autour d'un axe (9) et être fixée à l'autre extrémité dans différentes positions, par exemple au moyen d'une vis de serrage (10), ce qui permet de modifier la distance entre la cornière (4) et le cylindre (2).
